(19) Europäisches Patentamt
European Patent Office
Office européen des brevets

(11) Veröffentlichungsnummer: **0 009 068**
**B1**

(12) # EUROPÄISCHE PATENTSCHRIFT

(45) Veröffentlichungstag der Patentschrift: **09.06.82**

(51) Int. Cl.³: **B 01 J 23/74,** C 07 C 1/04

(21) Anmeldenummer: **79101137.2**

(22) Anmeldetag: **12.04.79**

(54) **Fliessbettkatalysatoren zur Herstellung von synthetischem Erdgas durch CO-Methanisierung.**

(30) Priorität: **13.04.78 DE 2816035**

(43) Veröffentlichungstag der Anmeldung:
**02.04.80 Patentblatt 80/7**

(45) Bekanntmachung des Hinweises auf die Patenterteilung:
**09.06.82 Patentblatt 82/23**

(84) Benannte Vertragsstaaten:
**BE FR GB IT NL**

(56) Entgegenhaltungen:
**DE - A - 1 938 079**
**FR - A - 2 358 924**

(73) Patentinhaber: **SÜD-CHEMIE AG**
**Lenbachplatz 6**
**D-8000 München 2 (DE)**

(72) Erfinder: **Kanzler, Karl-Heinz, Dr. Dipl.-Chem.**
**VERSTORBEN (DE)**
Erfinder: **Kochloefl, Karl, Dipl.-Ing. Dr.**
**Kreuzstrasse 2**
**D-8052 Moosburg, Obb (DE)**

(74) Vertreter: **Splanemann, Rainer, Dipl.-Ing. et al,**
**Patentanwälte Dipl.-Ing. R. Splanemann, Dr. B. Reitzner Tal 13**
**D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Fließbettkatalysatoren zur Herstellung von synthetischem Erdgas durch CO- Methanisierung

Die Erfindung betrifft Fließbettkatalysatoren zur Herstellung von synthetischem Erdgas durch CO-Methanisierung, bei welcher das CO mit Wasserstoff, gegebenenfalls unter Zusatz von Wasserdampf, umgesetzt wird.

Methanisierungskatalysatoren, die im nichtreduzierten Zustand Nickeloxid, gegebenenfalls auf einem temperaturbeständigen Trägermaterial sowie als Bindemittel einen hydraulischen Zement enthalten, sind als Festbettkatalysatoren z.B. aus der DE—AS 1 938 079 bekannt. Im einzelnen handelt es sich hierbei um kugelförmige Katalysatoren zur Herstellung von Methan, die durch Vermischen von 5 bis 40 Gew.-% Nickeloxid mit 0 bis 75 Gew.-% Aluminiumoxid als Trägermaterial und 15 bis 75 Gew.-% eines Bindemittels, wie Calciumaluminatzement und/oder Calciumsilikatzement in Gegenwart von Wasser hergestellt werden. Das Gemisch wird auf einer Granuliervorrichtung zu Kugeln geformt, die anschließend calciniert und reduziert werden, wobei eine bestimmte Dichte und ein bestimmtes Porenverhältnis erzielt wird.

Es wurde nun versucht, derartige kugelförmige Katalysatoren bzw. durch Strangpressen hergestellte Katalysatoren ähnlicher Zusammensetzung als Fließbettkatalysatoren zu verwenden, indem die jeweiligen Formkörper bis auf die für einen Betrieb im Fließbett erforderliche Korngröße zerkleinert wurden. Die so erhaltenen Bruchstücke hatten aber keine befriedigende Abriebfestigkeit. So wurde festgestellt, daß, je nach den angewendeten Arbeitsbedingungen, der Abrieb etwa 2,5 bis 10 Gew.-% pro Tag betrug.

Es ist ferner bekannt, die feuchte Ausgangsmasse zur Herstellung von Katalysatoren zu Tabletten zu pressen. Die hierbei angewendeten Preßdrucke waren jedoch verhältnismäßig niedrig, da man befürchtete, daß durch einen hohen Preßdruck die Porosität der Tabletten, insbesondere an der Oberfläche so weit erniedrigt würde, daß mit Aktivitätsverlusten gerechnet werden mußte.

Ferner hat man bereits versucht, Fließbettkatalysatoren für die Crackung von höheren Kohlenwasserstoffen durch Agglomeration der Ausgangsmasse herzustellen. Hierbei wurde beispielsweise ein Kieselsäuresol durch Sprühtrocknung oder Eintropfen in heißes Öl in kleine Kügelchen umgewandelt, die sich als Fließbettkatalysatoren eigneten. Diese Herstellungsverfahren sind jedoch kompliziert und aufwendig.

Ferner ist es bekannt, feine Teilchen eines harten Trägermaterials, wie Korund, mit Lösungen der aktiven Katalysatorbestandteile zu tränken. Die aktiven Bestandteile bleiben aber bevorzugt an der Oberfläche der Trägerteilchen und werden bei Verwendung dieser Teilchen als Fließbettkatalysatoren schnell abgeriebe, was nach kurzer Zeit zu einem Aktivitätsverlust führt.

Die FR—A—23 58 924 betrifft ein Verfahren zur Herstellung eines Katalysators für die Dampfreformierung von verhältnis mäßig schweren Kohlenwasserstoffen, wie Kerosin und Gasöl. Der Katalysator wird dadurch hergestellt, daß feinteiliges Nickeloxid mit feinteiligem Calciumoxid bzw. Calciumoxid-Vorstufen und einem hydraulischen Calciumaluminatzement unter Wasserzusatz vermischt wird, worauf das Gemisch zu Strangpreßlingen geformt wird. Diese werden dann in einer feuchten Atmosphäre ausgehärtet, getrocknet und calciniert. Dieser Katalysator ist kein Fließbettkatalysator, da die verhältnismäßig großen Strangpreßlinge erst weiter zerkleiner werden. Außerdem hat der Katalysator eine poröse Textur mit einer Porosität von 45 bis 75%, d.h. seine mechanische Festigkeit ist für einen Fließbettkatalysator nicht ausreichend.

Der Erfindung liegt dagegen die Aufgabe zugrunde, einen Fließbettkatalysator zur Herstellung von synthetischem Erdgas durch CO-Methanisierung zur Verfügung zu stellen, dessen Abrieb im Betrieb weniger als etwa 2 Gew.-% pro Tag beträgt. Ferner soll ein solcher Katalysator trotz verminderter Porosität als Folge der Erhöhung der Abriebfestigkeit noch so aktiv sein, daß er die Umsetzung des CO zu Methan möglichst nahe an der thermodynamischen Grenze ermöglicht, wobei die Aktivität ferner über längere Zeit konstant bleiben soll.

Diese Aufgabe wird erfindungsgemäß durch einen Fließbettkatalysator zur Herstellung von synthetischem Erdgas durch CO-Methanisierung gelöst, der im nichtreduzierten Zustand Nickeloxid auf einem temperaturbeständigen Trägermaterial sowie einen hydraulischen Zement enthält, und der durch Formen und Calcinieren der erhaltenen Formkörper herstellbar ist; der Katalysator ist dadurch gekennzeichnet, daß er dadurch hergestellt worden ist, daß ein Nickeloxid enthaltendes Trägermaterial oder ein mechanisches Gemisch aus Nickeloxid und Trägermaterial im Gemisch mit einem hydraulischen Zement als Bindemittel in angefeuchtetem Zustand bei Drucken von mehr als 1569 bar (1600 kp/$cm^2$) zu Formkörpern gepreßt wurde, die gepreßten Formkörper nach dem Calcinieren durch Behandlung mit Wasser oder Dampf gehärtet, nachcalciniert und anschließend zerkleinert wurden und daß aus dem zerkleinerten Material eine Teilchenfraktion von 40 bis 350 $\mu$m gewonnen wurde.

Die erfindungsgemäßen Fließbettkatalysatoren haben unter Reaktionsbedingungen einen Abrieb von weniger als 2 Gew.-% pro Tag. In einigen Fällen lag der Abrieb sogar nur zwischen 0,1 und 0,3 Gew.-% pro Tag.

Die Fließbettkatalysatoren gemäß der Erfindung können im nichtreduzierten Zustand vorzugsweise 10 bis 77 (insbesondere 20 bis 60) Gew.-% Trägermaterial, 3 bis 60 Gew.-% NiO und 20 bis 40 Gew.-% hydraulischen Zement enthalten.

Als Trägermaterialien kommen vorzugsweise feuerfeste anorganische Oxide oder Silikate infrage, die einen neutralen oder basischen Oberflächencharakter haben. Katalysatoren mit saurem Oberflächencharakter zeigen die Neigung zur Rußbildung, da sie die Boudouard-Reaktion ($2CO \rightarrow C + CO_2$) begünstigen. Der Oberflächencharakter des Trägermaterials wird durch Chemisorption von organischen Basen bzw. Säuren festgestellt (K. Tanabe: Solid Acids and Bases; Academic Press, New York, 1970, Seiten 5—44).

Bevorzugte Trägermaterialien sind $Al_2O_3$, $ZrO_2$, $Cr_2O_3$, MgO, Kieselgur, Tone oder Tonmineralien, insbesondere Kaolin, $MoO_3$, $WO_3$ sowie Gemische dieser Substanzen.

Besonders vorteilhaft vom Standpunkt der Härte sind $Al_2O_3$, $Cr_2O_3$ und Kieselgur, die mit dem Zementbindemittel sehr harte Agglomerate bilden.

Bei Verwendung bestimmter Gemische von Trägermaterialien kann die Sprödigkeit der Fließbettkatalysatoren herabgesetzt werden. Diese bewirkt insbesondere in den ersten Betriebsstunden einen erhöhten Abrieb, da die Teilchen unmittelbar nach der Zerkleinerung noch unregelmäßig geformt und noch nicht abgeschliffen sind. Trägersubstanzen, die die Sprödigkeit herabsetzen, sind Tone oder Tonmineralien, insbesondere Kaolin, sowie Molybdäntrioxid und Wolframtrioxid. Die beiden zuletzt genannten Substanzen erhöhen auch die Beständigkeit der Katalysatoren gegenüber den in den Reaktionsgasen enthaltenen Schwefelverbindungen und tragen somit zu einer Erhöhung der Langzeitaktivität der erfindungsgemäßen Katalysatoren bei.

Vorzugsweise beträgt der Anteil an den die Sprödigkeit herabsetzenden Trägermaterialien Kaolin, $MoO_3$ bzw. $WO_3$ im Trägermaterialgemisch bis zu 50 Gew.-%.

Ein wesentlicher Bestandteil der erfindungsgemäßen Fließbettkatalysatoren ist der hydraulische Zement, der als Bindemittel für das reine bzw. auf das Trägermaterial aufgebrachte Nickeloxid dient. Bevorzugt wird als hydraulischer Zement Portland-Zement oder Calciumaluminat-Zement verwendet. Es ist nicht erforderlich, daß der Zement besonders rein ist; es kann beispielsweise auch Portland-Zement für Bauzwecke verwendet werden, der noch gewisse Mengen an Eisen enthält. Die Anwesenheit von Eisen im Zement ist in einigen Fällen sogar erwünscht, weil sich in diesem Fall neben Methan in kleineren Mengen noch Äthan bildet. Enthält das synthetische Erdgas Äthan, so erhöht sich sein Heizwert, so daß dieser an den Hiezwert natürlichem Erdgas herankommt.

Die erfindungsgemäßen Katalysatoren haben vorzugsweise eine Teilchengröße von etwa 64 bis 240 µm. Es hat sich herausgestellt, daß dieser Teilchengrößebereich einerseits ein optimaler Bereich für den Einsatz des Katalysators in einem Fließbett darstellt; andererseits kann dieser Korngrößebereich leicht durch Zerkleinerung der Tabletten in einer Walzenmühle in einer verhältnismäßig hohen Ausbeute erhalten werden, ohne daß ein zu hoher Anteil an Feinkornfraktion anfällt.

Wie bereits vorstehend ausgeführt, ist es erforderlich, daß der Druck zum Pressen der Formkörper mindestens 1569 bar (1600 kg/cm²) beträgt. Erst oberhalb dieses Druckes werden die Nickeloxidteilchen bzw. die mit dem Nickeloxid beladenen Trägermaterialteilchen so mit den Teilchen des hydraulischen Zements vereinigt, daß die gewünschte Abriebfestigkeit erhalten wird. Es reicht also nicht aus, die Zementteilchen in Gegenwart von Wasser mit den anderen Teilchen ohne Druck bzw. bei einem geringeren Druck miteinander zu verbinden, da die so erhaltenen Agglomerate nur eine unbefriedigende Abriebfestigkeit haben würden. Im allgemeinen nimmt die Abriebfestigkeit mit steigendem Preßdruck zu, jedoch gewöhnlich nur bis zu einem Druck von etwa 3138 bar (3200 kp/cm²), so daß üblicherweise nicht bei höheren Drucken gearbeitet wird.

Die erfindungsgemäßen Fließbettkatalysatoren werden im allgemeinen wie folgt hergestellt:

Das mit dem Nickeloxid beladene Trägermaterial bzw. ein mechanisches Gemisch aus Trägermaterial und feinteiligem Nickeloxid wird zusammen mit dem hydraulischen Zement in den vorstehend angegebenen Mengenverhältnissen trocken gemischt. Will man einen Trägerkatalysator herstellen, so ist es nicht unbedingt erforderlich, daß das Trägermaterial bereits mit dem Nickeloxid beladen ist. Man kann beispielsweise auch so vorgehen, daß man pulverförmiges Nickeloxid trocken mit dem Trägermaterial und dem hydraulischen Zement vermischt. Wird ein bereits mit Nickeloxid beladenes Trägermaterial verwendet, so kann dieses in einer Vorstufe durch Imprägnierung des Trägermaterials mit einer Nickelsalzlösung oder durch Mischfällung des Trägermaterials und des Nickeloxids und anschließende Calcinierung hergestellt sein.

Das trockene Vermischen der Bestandteile kann im allgemeinen nach etwa 10 bis 20 Minuten als beendet angesehen werden, da das Gemisch nach dieser Zeit im allgemeinen bereits ausreichend homogen ist. Dem trockenen Gemisch wird im allgemeinen entmineralisiertes Wasser zugesetzt, so daß eine zähflüssige Masse erhalten wird. Der Wasserzusatz beträgt gewöhnlich 40 bis 50 Gew.-%.

In einigen Fällen empfiehlt sich auch der Zusatz von Graphit oder anderen Gleitmitteln, wie Aluminiumstearat für das anschließende Verpressen zu Formkörpern. Das Einmischen des Gleitmittels dauert etwa 5 bis 10 Minuten.

In einigen Fällen ist es zweckmäßig, die

pastenförmige Katalysatormasse einer Vortrocknung zu unterziehen. Die Vortrocknung kann bei etwa 100 bis 120°C erfolgen. Wurde die Katalysatormasse, wie oben angegeben, mit 40 bis 50 Gew.-% Wasser angefeuchtet, so kann beispielsweise bis zu einem Trocknungsverlust von 14 bis 16 Gew.-% getrocknet werden.

An die Einfeuchtung bzw. Vortrocknung schließt sich das Pressen der Katalysatormasse zu Formkörpern an. Es können z.B. Tabletten von 4×4 bzw. 6×6 mm (Durchmesser×Höhe) hergestellt werden. Hierzu wird vorzugsweise ein Druck von 1569 bis 3138 bar (1600 bis 3200 kp/cm$^2$) angewendet, wobei höhere Drucke in der Regel nicht erforderlich sind, da sie keine weitere Erhöhung der Abriebfestigkeit bringen. Mit den angegebenen Drucken erhält man Tabletten, die im "grünen", d.h. nichtcalcinierten Zustand eine Seitendruckfestigkeit (SDF) von etwa 1 bis 2 kg/mm Mantellänge erreichen.

Die Formkörper werden dann gewöhnlich einige Tage gealtert; sie können beispielsweise 3 bis 6 Tage bei Raumtemperatur in einem geschlossenen Gefäß aufbewahrt werden.

Anschließend können die Formkörper einer Vorcalcinierung unterzogen werden, die bei etwa 190 bis 230°C über einen Zeitraum von 4 bis 6 Stunden durchgeführt werden kann. An die Vorcalcinierung schließt sich eine Härtungsbehandlung an, die entweder durch Wässern der Katalysatorkörper in entmineralisiertem Wasser oder durch Behandlung mit Dampf durchgeführt werden kann. Die Härtungszeit in Wasser bei Raumtemperatur (etwa 20°C) beträgt etwa 24 bis 48 Stunden. Die Härtungszeit bei einer Behandlung mit Dampf von etwa 150°C (5 bar) beträgt beispielsweise etwa 12 Stunden. Die Temperaturen und Zeiten der Wasser- bzw. Dampfbehandlung zur Aushärtung der Katalysatorformkörper können natürlich innerhalb weiter Bereiche variiert werden.

Nach der Aushärtung werden die Katalysator-Formkörper nachcalciniert, wobei Temperaturen von etwa 230 bis 450°C angewendet werden können. Gewöhnlich beträgt die Calcinierdauer wie bei der Vorcalcinierung etwa 4 bis 6 Stunden. Nach dem Nachcalcinieren erhält man Katalysatorformkörper mit einer Seitendruckfestigkeit von 4 bis 6 kg/mm Mantellänge. Die Tabletten werden dann zweckmäßig in einer Walzenmühle mit einem zwischen 2 und 0,2 mm verstellbaren Spalt zwischen den Walzen zerkleinert. Es genügen im allgemeinen 4 bis 8 Durchgänge durch die Walzenmühle. Die erhaltenen Teilchen werden gesiebt und einer Windsichtung unterzogen, um die feinen Anteile aus dem Mahlgut zu entfernen. Es wird dann eine Kornfraktion von etwa 40 bis 350 $\mu$m, vorzugsweise von etwa 64 bis 240 $\mu$m in einer Ausbeute von etwa 65 bis 85 Gew.-% bezogen auf die Tabletten, gewonnen. Durch die angegebene Art der Mahlung ist es also möglich, einen hohen Anteil an der gewünschten Teilchenfraktion zu erhalten.

Dem Katalysator kann auch Alkali zugesetzt werden, vorzugsweise ein Kaliumsalz in einer Menge von etwa 3 Gew.-% (als $K_2O$-Äquivalent auf den nichtreduzierten Katalysator berechnet) Der Alkalizusatz kann während des trockenen Vermischens der Bestandteile bzw. während des Einfeuchtens erfolgen. Durch den Alkalizusatz wird die Kohlenstoffabscheidung auf dem Katalysator zurückgedrängt.

Die erhaltenen Katalysatorteilchen müssen vor ihrem Einsatz als Fließbett-Methanisierungskatalysatoren mindestens teilweise reduziert werden. Die Reducktion kann in der Methanisierungsanlage oder in einer gesonderten Anlage erfolgen.

Die Reduktionsbedingungen für Nickelkatalysatoren sind an sich bekannt. Zunächst wird die Luft im Reaktionsgefäß durch ein Inertgas, wie Stickstoff, verdrängt, worauf Wasserstoff in allmählich zunehmender Konzentration über den erhitzten Katalysator geleitet wird. Die Reduktionstemperatur beträgt im allgemeinen etwa 380 bis 430°C. Es ist im allgemeinen ausreichend, wenn der Reduktionsgrad ($NiO \rightarrow Ni$) 70 bis 80% beträgt.

Die Methanisierung erfolgt im allgemeinen bei Temperaturen von etwa 250 bis 550°C bei einem Molverhältnis $H_2/CO$ von 1,5 bis 3,5:1 oder höher. Es laufen hierbei im wesentlichen folgende Reaktionen ab:

$$CO+3H_2 \longrightarrow CH_4+H_2O$$
$$CO+H_2O \longrightarrow CO_2+H_2 \text{ bzw.}$$
$$2CO+2H_2 \longrightarrow CH_4+CO_2$$

Die Methanisierung wird im allgemeinen bei einer Raumgeschwindigkeit von etwa 1000 bis 3000 Liter Gasgemisch je Stunde und Liter Katalysator durchgeführt. Der Druck beträgt etwa 5 bis 60, vorzugsweise 5 bis 30 bar.

Das mit Hilfe der Katalysatoren gemäß der Erfindung erhaltene synthetische Erdgas enthält (nach Entfernung des Wasserdampfes und des restlichen $CO_2$) bis zu etwa 88 Vol.-% Methan. Fällt ein Gas mit einem niedrigeren Methangehalt und damit einem niedrigeren Heizwert an, so kann man den Heizwert dadurch erhöhen, daß man im gasförmigen Reaktionsgemisch $C_2H_6$ als Nebenprodukt zu Methan in Mengen von etwa 0,5 bis 5 Vol.-% erzeugt. Man erzielt diese Wirkung, wenn der Katalysator Zusätze von Fe, Co und/oder Th in Mengen von etwa 0,1 bis 1,0 enthält.

Die Erfindung ist durch die nachstehenden Beispiele in nicht einschränkender Weise erläutert:

Beispiel 1

30 kg kieselgurhaltiges Nickeloxid (63,5 Gew.-% NiO), hergestellt durch thermische Zersetzung von Nickelammincarbonatlösung in Gegenwart von Kieselgur und anschließende Calcinierung, werden mit 39,3 kg Kaolin, 31,5

kg Kieselgur und 44,6 kg Portlandzement im Kollergang in trockenem Zustand gemischt. Nach 15 Minuten intensiven Mischens werden portionsweise 65 Liter entmineralisiertes Wasser zugegeben, und es wird weitere 10 Minuten gemischt. Danach werden 4,8 kg Graphit zugegeben, und das Mischen wird noch weitere 10 Minuten fortgesetzt. Die so gewonnene Masse wird anschließend bei 110°C so lange getrocknet, bis der Trocknungsverlust auf 15 Gew.-% abgesunken ist. Dann wird die Masse mit einem Druck von 2746 bar (2800 kp/cm$^2$) zu Tabletten von 4×4 mm verformt, diese bei Raumtemperatur 5 Tage in einem geschlossenen Gefäß gelagert und schließlich bei 220°C während 5 Stunden vorcalciniert. Die vorcalcinierten Tabletten werden später einer Aushärtung durch Wasserdampf bei 150°C und 5 bar Druck (12 Stunden) unterzogen. Dieser Vorgang wird mit der Nachcalcinierung (220°C, 5 Stunden) abgeschlossen. Die so hergestellten Tabletten besitzen eine Seitendruckfestigkeit von mindestens etwa 25 kg/Tabl.

Die Zerkleinerung dieser Tabletten erfolgt auf einer Walzenmühle mit einem Spalt von 2 mm. Von dem entstandenen Granulat werden Teilchen kleiner als 240 $\mu$m abgesiebt, und der Rest wird weiter auf der Walzenmühle zerkleinert, wobei der Spalt auf 1 mm eingestellt wird. Nach dem Absieben wird dieser Vorgang noch zweimal wiederholt, wobei der Spalt der Walzenmühle im dritten und vierten Durchgang auf 0,5 und schließlich auf 0,2 mm verengt wird.

Aus dem gewonnenen Mahlgut werden durch Windsichten die Teilchen entfernt, die kleiner als 64 $\mu$m sind. Die Ausbeute an der Kornfraktion 64 bis 240 $\mu$m beträgt 80 Gew.-%, berechnet auf die eingesetzten Tabletten. Die Abriebfestigkeit des nichtreduzierten Granulats, gemessen nach dem "Cyanamid-Test" (Forsythe und Hertwig: Ind. Eng. Chem. *41*, 1200 (1949)) liegt zwischen 0,2 und 0,6 Gew.-% pro Tag. Im reduzierten Zustand beträgt der Abrieb im allgemeinen nur die Hälfte, d.h. etwa 0,1 bis 0,3 Gew.-% pro Tag.

Die Reduktion des Methanisierungskatalysators erfolgt direkt im Wirbelbettreaktor bei 420°C und bei einem Druck von 1—5 bar mit reinem Wasserstoff (Raumgeschwindigkeit 500 Nm$^3$/h m$^3$Kat). Nach 24 Stunden wird üblicherweise ein Reduktionsgrad (berechnet auf NiO) von ca 75 Gew.-% erreicht.

Beispiel 2

45 kg aluminiumoxidhaltiges Nickeloxid (70% NiO), hergestellt durch gemeinsame Fällung von Nickel- und Aluminiumnitrat durch Kaliumcarbonat und anschließende Calcinierung bei 400°C, werden mit 100 kg Aluminiumoxid-Trihydrat (Hydrargyllit) und 64 kg Calciumaluminat-Zement im Kollergang trocken 15 Min. gemischt. Danach werden portionsweise 50 Liter entmineralisiertes Wasser zugegeben und weitere 10 Min. gemischt. Anschließend werden noch 6,4 kg Graphit zugegeben, und das Mischen wird noch 10 Min. fortgesetzt.

Die weitere Verarbeitung (Vortrocknen, Verformung und Aushärtung mit Wasserdampf) erfolgt wie in Beispiel 1 angegeben. Die Endcalcinierung wird bei 400°C während 12 Stunden durchgeführt. Die nach diesem Verfahren fertiggestellten Tabletten von 4×4 mm weisen eine Seitendruckfestigkeit von etwa 28 kg/Tabl. auf. Das gewünschte Granulat (64—240 $\mu$m) wird wie in Beispiel 1 hergestellt. Die Ausbeute an dieser Kornfraktion beträgt etwa 75 Gew.-%, berechnet auf die Menge der eingesetzten Tabletten. Die Abriebfestigkeit liegt bei höchstens etwa 1,8 Gew.-% Tag und vermindert sich im reduzierten Zustand um ein Drittel bis die Hälfte. Die Reduktion dieses Fließbettkatalysators wird wie nach Beispiel 1 durchgeführt.

Beispiel 3

32 kg Nickeloxid werden mit 12 kg Molybdäntrioxid (Schüttgewicht=325g/Liter), 180 kg Aluminiumoxid-Trihydrat (Hydrargyllit) und 60 kg Portland-Zement im Kollergang trocken 15 Min. gemischt. Danach werden portionsweise 90 Liter entmineralisiertes Wasser zugegeben und weitere 10 Min. gemischt. Anschließend werden noch 6,4 kg Graphit zugegeben, und das Mischen wird noch weitere 10 Min. fortgesetzt. Die weitere Verarbeitung (Vortrocknen, Verformung und Aushärtung mit Wasserdampf) erfolgt wie in Beispiel 1 angegeben. Die Endcalcinierung wird bei 230°C während 4 Stunden durchgeführt. Die nach diesem Verfahren hergestellten Tabletten von 4×4 mm weisen eine Seitendruckfestigkeit von etwa 16 kg/Tab. auf. Das gewünschte Granulat (64—240 $\mu$m) wird wie in Beispiel 1 hergestellt. Die Ausbeute an dieser Kornfraktion beträgt ca. 78 Gew.-%, berechnet auf die Menge der eingesetzten Tabletten. Die Abriebfestigkeit liegt bei höchstens etwa 0,8 Gew.-%/Tag und vermindert sich im reduzierten Zustand um ein Drittel bis die Hälfte.

Die Reduktion dieses Fließbettkatalysators wird wie in Beispiel 1 durchgeführt.

Beispiel 4

45 kg Mischoxide (70 Gew.-% NiO, 25 Gew.-% $Al_2O_3$, 5 Gew.-% $Cr_2O_3$), hergestellt durch gemeinsame Fällung der entsprechenden Nitrate mit Kalium-carbonat und anschließende Calcinierung bei 400°C, werden mit 100 kg Aluminiumoxid-Trihydrat (Hydrargyllit) und 55 kg Calciumaluminat-Zement im Kollergang trocken 15 Min. gemischt. Danach werden portionsweise 50 Liter wäßriger Kaliumhydroxidlösung (enthält 0,7 kg KOH) zugegeben und weitere 10 Min. gemischt. Anschließend werden noch 5,5 kg Graphit zugegeben, und das Mischen wird noch 10 Min. fortgesetzt.

Die weitere Verarbeitung (Vortrocknung, Verformung und Aushärtung mit Wasserdampf und Endcalcinierung) erfolgt wie in Beispiel 2 angegeben. Die nach diesem Verfahren fertiggestellten Tabletten von 4×4 mm weisen eine Seitendruckfestigkeit von etwa 27 kg/Tablette auf. Das gewünschte Granulat (64—240 μm) wird wie in Beispiel 1 hergestellt. Die Ausbeute an dieser Kornfraktion beträgt etwa 78 Gew.-%, berechnet auf die Menge der eingesetzten Tabletten. Der Abrieb beträgt höchstens etwa 1.7 Gew.-%/Tag. Die Reduktion dieses Wirbelbettkatalysators wird wie in Beispiel 1 durchgeführt.

Anwendungsbeispiel 1

Ein reduzierter Fließbettkatalysator, dessen Herstellung in Beispiel 2 beschrieben wurde, wird bei 400°C und einem Gesamtdruck von 15 bar mit einer Gasmischung (24,0 Vol.-% CO, Rest $H_2$; $H_2$/CO (Mol.Verhältnis)=3,17) bei einer Raumgeschwindigkeit von 1100 Liter Gasmischung je Liter Katalysator und Stunde beaufschlagt, wobei das Verhältnis zwischen Eintrittsgas und Umwälzgas bei 1,8 gehalten wird. Das Austrittsgas (nach $H_2O$—Entfernung) hat folgende Zusammensetzung:

| | |
|---|---|
| CO | 0,9 Vol.-% |
| $CO_2$ | 1,7 Vol.-% |
| $CH_4$ | 74,6 Vol.-% |
| $H_2$ | 22,8 Vol.-% |

Der Katalysatorabrieb unter diesen Bedingungen beträgt etwa 0,8 Gew.-%/Tag nach 24 Stunden Einlaufzeit. Nach einer Betriebszeit von 48 Stunden ist keine Änderung des CO-Umsatzes zu beobachten.

Anwendungsbeispiel 2

Ein reduzierter Fließbettkatalysator, dessen Herstellung in Beispiel 3 beschrieben wurde, wird bei 420°C und einem Gesamtdruck von 70 bar mit einer Gasmischung (28,6 Vol.-% CO, Rest $H_2$; $H_2$/CO (Mol.Verhältnis)=2,5), die etwa 300 ppm $H_2S$ enthält, bei einer Raumgeschwindigkeit von 1030 Liter Gasmischung je Liter Katalysator und Stunde beaufschlagt, wobei das Verhältnis zwischen Eintrittsgas und Umwälzgas bei 1,5 gehalten wird. Das Austrittsgas (nach $H_2O$-Entfernung) hat folgende Zusammensetzung:

| | |
|---|---|
| CO | 0,8 Vol.-% |
| $CO_2$ | 12,7 Vol.-% |
| $CH_4$ | 73,8 Vol.-% |
| $C_2H_6$ | 0,4 Vol.-% |
| $H_2$ | 12,3 Vol.-% |

Der Katalysatorabrieb beträgt unter diesen Bedingungen etwa 1,2 Gew.-%/Tag nach 24 Stunden Einlaufzeit. Nach einer Betriebszeit von 48 Stunden ist keine Änderung des CO-Umsatzes zu beobachten.

Die erfindungsgemäßen Katalysatoren sind im nichtreduzierten Zustand vorzugsweise wie folgt zusammengesetzt:

| Komponente | Weiter Bereich | Bevorzugter Bereich |
|---|---|---|
| Nickel (als Oxid) | 3—60 Gew.-% | 9—50 Gew.-% |
| Träger | 10—77 Gew.-% | 15—66 Gew.-% |
| Hydraulischer Zement | 20—40 Gew.-% | 25—35 Gew.-% |

Bei der Herstellung werden die Komponenten gewöhnlich mit 15—35 Gew.-% Feuchtigkeit versetzt. Nach dem Pressen werden die Formkörper gewöhnlich 3 bis 8 Stunden bei etwa 150 bis 250°C calciniert. Für die anschließende Härtung wird entweder flüssiges Wasser oder Dampf verwendet. Bei dieser Behandlung nimmt der Katalysator etwa 5 bis 35 Gew.-% Wasser auf. Die sich an die Härtung anschließende Calcinierung wird gewöhnlich etwa 3 bis 15 Stunden bei etwa 200 bis 450°C durchgeführt, worauf die Formkörper zerkleinert werden.

**Patentansprüche**

1. Fließbettkatalysator zur Herstellung von synthetischem Erdgas durch CO-Methanisierung, der im nichtreduzierten Zustand Nickeloxid auf einem temperaturbeständigen Trägermaterial sowie einen hydraulischen Zement enthält und der durch Formen und Calcinieren der erhaltenen Formkörper herstellbar ist, dadurch gekennzeichnet, daß er dadurch hergestellt worden ist, daß ein Nickeloxid enthaltendes Trägermaterial oder ein mechanisches Gemisch aus Nickeloxid und Trägermaterial im Gemisch mit einem hydraulischen Zement als Bindemittel in angefeuchtetem Zustand bei Drucken von mehr als 1569 bar (1600 kp/cm²) zu Formkörpern gepreßt wurde, die gepreßten Formkörper nach dem Calcinieren durch Behandlung mit Wasser oder Dampf gehärtet, nachcalciniert und anschließend zerkleinert wurden und daß aus dem zerkleinerten Material eine Teilchenfraktion von 40 bis 350 μm gewonnen wurde.

2. Fließbettkatalysator nach Anspruch 1, dadurch gekennzeichnet, daß er im nichtreduzierten Zustand 10 bis 77 Gew.-% Trägermaterial, 3 bis 60 Gew.-% NiO und 20 bis 40 Gew.-% hydraulischen Zement enthält.

3. Fließbettkatalysator nach Anspruch 2, dadurch gekennzeichnet, daß das Trägermaterial $Al_2O_3$, $ZrO_2$, $Cr_2O_3$, MgO, Kaolin, $MoO_3$, $WO_3$, Kieselgur oder Gemische dieser Substanzen ist.

4. Fließbettkatalysator nach Anspruch 3, dadurch gekennzeichnet, daß der Anteil von Kaolin, $MoO_3$ bzw. $WO_3$ in Trägermaterialgemisch bis zu 50 Gew.-% beträgt.

5. Fließbettkatalysator nach einem der Ansprüche 1 bis 4, dadurch gekennzeichnet, daß

das zerkleinerte Material eine Teilchengröße von 64 bis 240 $\mu$m hat.

6. Fließbettkatalysator nach einem der Ansprüche 1 bis 5', dadurch gekennzeichnet, daß der Druck zum Pressen der Formkörper 1569 bis 3138 bar (1600 bis 3200 kp/cm$^2$) und die Temperaturen bei der ersten Calcinierung etwa 190 bis 230°C und bei der zweiten Calcinierung etwa 230 bis 450°C betragen.

7. Fließbettkatalysator nach einem der Ansprüche 1 bis 6, dadurch gekennzeichnet, daß die Härtungszeit in Wasser bei Raumtemperatur 24 bis 48 Stunden und bei der Dampfbehandlung bei 150°C etwa 12 Stunden beträgt.

8. Fließbettkatalysator nach einem der Ansprüche 1 bis 7, weiterhin gekennzeichnet durch einen Alkalizusatz in Mengen von bis zu 3 Gew.-% (als $K_2O$-Äquivalent auf den nichtreduzierten Katalysator berechnet).

## Claims

1. A fluidised-bed catalyst for the production of synthetic natural gas by CO-methanation, which catalyst in the unreduced state contains nickel oxide on a temperature resistant support material and also a hydraulic cement, and which is produced by shaping to give a shaped body which is then calcined, characterised in that it is produced in such a way that a support material containing nickel oxide or a mixture of nickel oxide and support material, admixed with moist hydraulic cement as a binder, is compressed at pressures of more than 1569 bars (1600 kp/cm$^2$) to form shaped bodies, that the compressed shaped bodies after calcination are hardened by treatment with water or steam, recalcined and subsequently pulverised, and that a particle fraction of from 40 to 350 $\mu$m is obtained from the pulverised material.

2. A fluidised-bed catalyst according to Claim 1, characterised in that in the unreduced state it contains 10 to 77% by weight of support material, 3 to 60% by weight of NiO and 20 to 40% by weight of hydraulic cement.

3. A fluidised-bed catalyst according to Claim 2, characterised in that the support material is $Al_2O_3$, $ZrO_2$, $Cr_2O_2$, $Cr_2O_3$, MgO, kaolin, $MoO_3$, $WO_3$, diatomaceous earth or mixtures of these substances.

4. A fluidised-bed catalyst according to Claim 3, characterised in that support material contains up to 50% by weight of kaolin, $MoO_3$ or $WO_3$.

5. A fluidised-bed catalyst according to one of Claims 1 to 4, characterised in that the pulverised material has particle size of from 62 to 240 $\mu$m.

6. A fluidised-bed catalyst according to one of Claims 1 to 5, characterised in that the pressure for compressing the shaped bodies is of from 1569 to 3138 bars (1600 to 3200 kp/cm$^2$) and the temperatures during the first calcination are of from approximately 190 to 230°C and during the second calcination are of from approximately 230 to 450°C.

7. A fluidised-bed catalyst according to one of Claims 1 to 6, characterised in that the hardening time in water at room temperature is 24 to 48 hours and with the steam treatment at 150°C is approximately 12 hours.

8. A fluidised-bed catalyst according to one of Claims 1 to 7, further characterised by an addition of alkali in an amount of up to 3% by weight (calculated as $K_2O$ equivalent on the unreduced catalyst).

## Revendications

1. Catalyseur en lit fluidisé destiné à produire du gaz naturel de synthèse par méthanisation de CO, qui renferme à l'état non-réduit de l'oxyde de nickel sur une matière de support thermiquement stable, ainsi qu'un ciment hydraulique et que l'on peut obtenir par profilage et calcination des corps profilés obtenus, caractérisé en ce qu'on l'obtient en pressant en corps profilés une matière de support renfermant de l'oxyde de nickel ou un mélange mécanique d'oxyde de nickel et de matière de support en mélange avec un ciment hydraulique comme liant à l'état humidifié à des pression des plus de 1569 bars (1.600 Kg/cm$^2$), en durcissant les corps profilés pressés après la calcination par traitement par de l'eau ou de la vapeur, en leur faisant subir une post-calcination, puis en les fragmentant, et en ce que l'on obtient à partir de la matière fractionnée une fraction granulométrique de 40 à 350 microns.

2. Catalyseur en lit fluidisé selon la revendication 1, caractérisé en ce qu'il renferme à l'état non-réduit 10 à 77% en poids de matière de support, 3 à 60% en poids de NiO et 20 à 40% en poids de ciment hydraulique.

3. Catalyseur selon la revendication 2, caractérisé en ce que la matière de support est $Al_2O_3$, $ZrO_2$, $Cr_2O_3$, MgO, le kaolin, $MoO_3$, $WO_3$, la terre d'infusoires ou des mélanges de ces substances.

4. Catalyseur selon la revendication 3, caractérisé en ce que la proportion de kaolin, de $MoO_3$ ou de $WO_3$ dans le mélange de matière de support peut atteindre 50% en poids.

5. Catalyseur selon l'une des revendications 1 à 4, caractérisé en ce que la matière fragmentée a une dimension granulométrique de 64 à 240 microns.

6. Catalyseur selon l'une des revendications 1 à 5, caractérisé en ce que la pression de formage des corps profilés est de 1.560 à 3.138 bars (1.600 à 3.200 Kg/cm$^2$), et les températures d'environ 190 à 230°C à la première calcination et de 230 à 450°C à la seconde calcination.

7. Catalyseur selon l'une des revendications 1 à 6, caractérisé en ce que la durée de durcissement dans l'eau à la température ambiante est de 24 à 48 heures et, pour le

traitement par la vapeur à 150°C, d'environ 12 heures.

8. Catalyseur selon l'une des revendications 1 à 7, caractérisé en ce que l'on ajoute un alcalin dans des proportions pouvant atteindre 3% en poids (en équivalent de $K_2O$ rapporté au catalyseur non-réduit).